# EUROPEAN PATENT APPLICATION

(11) **EP 3 246 843 A1**
(43) Date of publication of application: **22.11.2017**
(21) Application number: 15877487.7
(22) Date of filing: 30.01.2015
(51) Int. Cl.: G06F 21/62

(54) **TERMINAL CONTACT MANAGEMENT METHOD, MANAGEMENT DEVICE AND TERMINAL**

(30) Priority: 14.01.2015 CN 201510018533
(71) Applicant: Yulong Computer Telecommunication Scientific (Shenzhen) Co., Ltd., Shenzhen, Guangdong 518057 (CN)
(72) Inventor: GUO, Xiongwei, Shenzhen Guangdong 518057 (CN); FU, Wenzhi, Shenzhen Guangdong 518057 (CN)
(74) Representative: Cordina, Kevin John
(86) International application number: PCT/CN2015/072010
(87) International publication number: WO 2016/112569

(57) **Abstract**

A management method and management device for contacts in a terminal, and the terminal are provided. The terminal includes a first system and a second system, and the management method includes setting a data channel between the first system and the second system; permitting the first system to read contact information in the second system through the data channel when a current running system in the terminal is the first system; and prohibiting the second system from reading contact information in the first system through the data channel when the current running system in the terminal is the second system. The present disclosure ensures high-level security of contact information in a security system, realizes an interaction of contact information between an ordinary system and the security system, and improves user experience.

## Description

### CROSS-REFERENCE TO RELATED APPLICATIONS

This application claims priority of Chinese Patent Application No. 201510018533.7, entitled "management method and management device and terminal for contacts in terminal," filed on January 14, 2015 in the SIPO (State Intellectual Property Office of the People's Republic of China), the entire contents of which are incorporated by reference herein.

### FIELD

The embodiments of the present disclosure relate to client terminal technology, and specifically to a management method and a management device for contacts in a terminal, and the terminal.

### BACKGROUND

For data security reasons, an idea of installing dual systems in a current terminal (e.g., a smart phone) has been provided, namely installing an ordinary system and a security system in the terminal. In the security system, contact information is not read from the subscriber identity module (SIM) card, but in the security system of the terminal. Meanwhile, the security system does not access the SIM card directly and the contact information in the SIM card is not displayed in the security system. In addition, the security system does not enable the user to read and write files in the security system even by connecting to a computer through a Universal Serial Bus (USB) cable.

Although data can be secured effectively in the above manner, it is very troublesome when there is a need to execute a batch processing operation on the contact information. For example, a mobile phone can store 5000 contacts, of which 100 contacts need to be kept secret. Thus, a user needs to re-input contact information repeatedly when classifying and transferring the contacts. In addition, the contact information may include various kinds of data, such as images relating to the contacts, websites, addresses, birthdays, and memorial days. A current security system is energy consuming for the user to implement the batch processing operation on the contact information under an interaction strategy of the current security system, and user experience is affected correspondingly.

Therefore, ensuring high-level security of the contact information in the security system, and rendering convenient all interactions between the ordinary system and the security system in relation to the contact information is problematic.

### SUMMARY OF THE INVENTION

To solve the above problem, the present disclosure relates to managing contacts in a terminal, to ensure high-level of security of contact information in a security system, realizes an interaction of the contact information between an ordinary system and the security system, and improve user experience.

Therefore, according to one aspect of the present disclosure, a management method is provided for contacts in a terminal, the terminal includes a first system and a second system. The management method includes: setting a data channel between the first system and the second system for implementing a communication; permitting the first system to read contact information in the second system through the data channel, under the condition that a current running system in the terminal is the first system; and prohibiting the second system from reading contact information in the first system through the data channel, under the condition that the current running system in the terminal is the second system.

In the above embodiment, by setting the data channel between the first system and the second system for implementing the communication, permitting the first system to read contact information in the second system through the data channel under the condition that the current running system in the terminal is the first system, and prohibiting the second system from reading contact information in the first system through the data channel under the condition that the current running system in the terminal is the second system, the contact information in the second system can be read, such as copied and moved, under the first system. The interaction between the first system and the second system in relation to the contact information can thus be realized, and a user can more conveniently transfer the contact information from the second system to the first system, and it is helpful to improve the user experience. Meanwhile, as the second system is prohibited from reading the contact information in the first system through the data channel, data security of the first system can be ensured. For example, the first system can be the security system, and the second system can be the ordinary system.

In the above embodiment, preferably, the management method further includes: determining whether the current running system of the terminal is the first system or the second system, when a command to view all contact information in the terminal is received; displaying the contact information in the first system or displaying the contact information in the first system and the contact information in the second system, under the condition that the current running system in the terminal is the first system; and displaying the contact information in the second system, under the condition that the current running system in the terminal is the second system.

In the above embodiment, the first system is based on a higher authorization, that is, the contact information stored in both of the first system and the second system can be viewed under the first system. However, the contact information stored in the first system cannot be displayed under the second system, thereby avoiding leakage of the contact information stored in the first system.

In the above embodiment, preferably, the management method further includes: displaying the contact information in the second system for selecting by the user when the current running system in the terminal is the first system and a command to move or copy the contact information from the second system to the first system is received, and moving or copying selected contact information to the first system through the data channel; and/or
displaying the contact information in the first system for selecting by the user when the current running system in the terminal is the first system and a command to move or copy the contact information from the first system to the second system is received, and moving or copying selected contact information to the second system through the data channel.

According to the above embodiment, an interaction of contact information between the first system and the second system is realized, at the same time, the security of the contact information in the first system is ensured because the contact information can be moved or copied only under the first system.

In the above embodiment, preferably, before moving or copying the selected contact information to the first system through the data channel, the management method further includes: executing a security check on the selected contact information, and permitting to move or copy the selected contact information to the first system through the data channel when the security check is passed.

In the above embodiment, by executing a security check on the selected contact information and permitting to move or copy the selected contact information to the first system through the data channel when the security check is passed, the moving of any malicious data to the first system, which can lead to data leakage of the first system, can be avoided. Thus, the security of the contact information in the first system can be more effectively ensured.

In the above embodiment, preferably, the contact information in the first system includes contact information stored in a storage space available to the first system, and the contact information in the second system includes contact information stored in a storage space available to the second system and contact information stored in a subscriber identity module (SIM) card of the terminal.

According to a second aspect of the present disclosure, a management device for contacts in a terminal is provided, the terminal includes a first system and a second system, and the management device includes: a setting unit configured to set a data channel between the first system and the second system for implementing a communication; and a processing unit configured to permit the first system to read contact information in the second system through the data channel under the condition that a current running system in the terminal is the first system, and prohibit the second system from reading contact information in the first system through the data channel under the condition that the current running system in the terminal is the second system.

In the above embodiment, by setting the data channel between the first system and the second system for implementing the communication, permitting the first system to read contact information in the second system through the data channel under the condition that the current running system in the terminal is the first system, and prohibiting the second system from reading contact information in the first system through the data channel under the condition that the current running system in the terminal is the second system, the contact information in the second system can be read, such as copied and moved, under the first system. The interaction between the first system and the second system in relation to the contact information can thus be realized, and a user can more conveniently transfer the contact information from the second system to the first system, and it is helpful to improve the user experience. Meanwhile, as the second system is prohibited from reading the contact information in the first system through the data channel, data security of the first system can be ensured. For example, the first system can be the security system, and the second system can be the ordinary system.

In the above embodiment, preferably, the processing unit includes: a determination unit configured to determine whether the current running system of the terminal is the first system or the second system, when a command to view all contact information in the terminal is received; a first display unit configured to display the contact information in the first system or display the contact information in the first system and the contact information in the second system, under the condition that the current running system in the terminal is the first system; and the first display unit further configured to display the contact information in the second system, under the condition that the current running system in the terminal is the second system.

In the above embodiment, the first system is based on a higher authorization, that is, the contact information stored in both of the first system and the second system can be viewed under the first system. However, the contact information stored in the first system cannot be displayed under the second system, thereby avoiding leakage of the contact information stored in the first system.

In the above embodiment, preferably, the processing unit includes: a second display unit configured to display the contact information in the second system for selecting by a user when the current running system in the terminal is the first system and a command to move or copy the contact information from the second system to the first system is received, and a first execution unit configured to move or copy selected contact information to the first system through the data channel; and/or
a third display unit configured to display the contact information in the first system for selecting by the user when the current running system in the terminal is the first system and a command to move or copy the contact information from the first system to the second system is received, and a second execution unit configured to move or copy selected contact information to the second system through the data channel.

According to the above embodiment, an interaction of contact information between the first system and the second system is realized, at the same time, the security of the contact information in the first system is ensured because the contact information can be moved or copied only under the first system.

In the above embodiment, preferably, the processing unit further includes: a checking unit configured to execute a security check on the selected contact information before the first execution unit moves or copies the selected contact information to the first system through the data channel, and permit to move or copy the selected contact information to the first system through the data channel when the security check is passed.

In the above embodiment, by executing a security check on the selected contact information and permitting to move or copy the selected contact information to the first system through the data channel when the security check is passed, the moving of any malicious data to the first system, which can lead to data leakage of the first system, can be avoided. Thus, the security of the contact information in the first system can be more effectively ensured.

According to a third aspect of the present disclosure, a terminal which includes the foregoing embodiments of a management device is provided.

The above embodiments ensure high-level security of the contact information in the security system, realize the interaction of the contact information between the ordinary system and the security system, and improve user experience.

### BRIEF DESCRIPTION OF THE DRAWINGS

FIG. 1 shows a flowchart of one embodiment of a management method for contacts in a terminal, according to the present disclosure.
FIG. 2 shows a schematic diagram of one embodiment of a management device for the contacts in the terminal, according to the present disclosure.
FIG. 3 shows a schematic diagram of one embodiment of an importing process of contacts under dual systems, according to the present disclosure.

### DETAILED DESCRIPTION

For clarity of illustration of objectives, features, and advantages of the present disclosure, where appropriate, the above drawings combined with detailed description illustrate the embodiments of the present disclosure. It may be appreciated that different embodiments and elements in different embodiments of the present disclosure can be combined, when there is no complicit.

The embodiments described herein are for better understanding of the present disclosure, other embodiments can also be practiced. The description is not to be considered as limiting the scope of the embodiments described herein.

In the embodiments of the present disclosure, a terminal including a first system and a second system is provided.

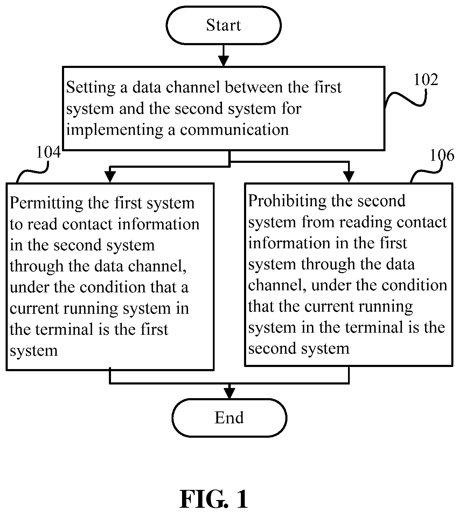

FIG. 1 shows a flowchart of one embodiment of a management method for contacts in a terminal, according to the present disclosure.

As shown in FIG. 1, the management method for the contacts in the terminal according to the present disclosure, includes: step 102, setting a data channel between the first system and the second system for implementing a communication; step 104, permitting the first system to read contact information in the second system through the data channel, under the condition that a current running system in the terminal is the first system; step 106, prohibiting the second system from reading contact information in the first system through the data channel, under the condition that the current running system in the terminal is the second system.

In the above embodiment, by setting the data channel between the first system and the second system for implementing the communication, permitting the first system to read contact information in the second system through the data channel under the condition that the current running system in the terminal is the first system, and prohibiting the second system from reading contact information in the first system through the data channel under the condition that the current running system in the terminal is the second system, the contact information in the second system can be read, such as copied and moved, under the first system. The interaction between the first system and the second system in relation to the contact information can thus be realized, and a user can more conveniently transfer the contact information from the second system to the first system, and it is helpful to improve the user experience. Meanwhile, as the second system is prohibited from reading the contact information in the first system through the data channel, data security of the first system can be ensured. In one embodiment, the first system can be the security system, and the second system can be the ordinary system.

In the above embodiment, preferably, the management method further includes: determining whether the current running system of the terminal is the first system or the second system, when a command to view all contact information in the terminal is received; displaying the contact information in the first system or displaying the contact information in the first system and the contact information in the second system, under the condition that the current running system in the terminal is the first system; and displaying the contact information in the second system, under the condition that the current running system in the terminal is the second system.

In the above embodiment, the first system is based on a higher authorization, that is, the contact information stored in both of the first system and the second system can be viewed under the first system. However, the contact information stored in the first system cannot be displayed under the second system, thereby avoiding leakage of the contact information stored in the first system.

In the above embodiment, preferably, the management method further includes: displaying the contact information in the second system for selecting by the user when the current running system in the terminal is the first system and a command to move or copy the contact information from the second system to the first system is received, and moving or copying selected contact information to the first system through the data channel; and/or
displaying the contact information in the first system for selecting by the user when the current running system in the terminal is the first system and a command to move or copy the contact information from the first system to the second system is received, and moving or copying selected contact information to the second system through the data channel.

According to the above embodiment, an interaction of contact information between the first system and the second system is realized, at the same time, the security of the contact information in the first system is ensured because the contact information can be moved or copied only under the first system.

In the above embodiment, preferably, before moving or copying the selected contact information to the first system through the data channel, the management method further includes: executing a security check on the selected contact information, and permitting to move or copy the selected contact information to the first system through the data channel when the security check is passed.

In the above embodiment, by executing a security check on the selected contact information and permitting to move or copy the selected contact information to the first system through the data channel when the security check is passed, the moving of any malicious data to the first system, which can lead to data leakage of the first system, can be avoided. Thus, the security of the contact information in the first system can be more effectively ensured.

In the above embodiment, preferably, the contact information in the first system includes contact information stored in a storage space available to the first system, and the contact information in the second system includes contact information stored in a storage space available to the second system and contact information stored in a subscriber identity module (SIM) card of the terminal.

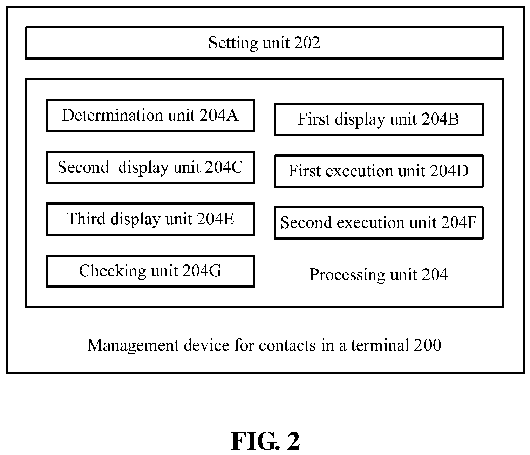

FIG. 2 shows a schematic diagram of one embodiment of a management device for the contacts in the terminal according to the present disclosure.

As shown in FIG. 2, a management device for the contacts in the terminal 200 (hereinafter referred to as "the management device 200") according to the present disclosure, includes a setting unit 202 and a processing unit 204.

In one embodiment, the setting unit 202 is configured to set a data channel between the first system and the second system for implementing a communication.

The processing unit 204 is configured to permit the first system to read contact information in the second system through the data channel under the condition that a current running system in the terminal is the first system, and prohibit the second system from reading contact information in the first system through the data channel under the condition that the current running system in the terminal is the second system.

In the above embodiment, by setting the data channel between the first system and the second system for implementing the communication, permitting the first system to read contact information in the second system through the data channel under the condition that the current running system in the terminal is the first system, and prohibiting the second system from reading contact information in the first system through the data channel under the condition that the current running system in the terminal is the second system, the contact information in the second system can be read, such as copied and moved, under the first system. The interaction between the first system and the second system in relation to the contact information can thus be realized, and a user can more conveniently transfer the contact information from the second system to the first system, and it is helpful to improve the user experience. Meanwhile, as the second system is prohibited from reading the contact information in the first system through the data channel, data security of the first system can be ensured. For example, the first system can be the security system, and the second system can be the ordinary system.

In the above embodiment, preferably, the processing unit 204 includes: a determination unit 204A configured to determine whether the current running system of the terminal is the first system or the second system, when a command to view all contact information in the terminal is received; a first display unit 204B configured to display the contact information in the first system or display the contact information in the first system and the contact information in the second system, when the determination module 204A determines that the current running system in the terminal is the first system; and the first display unit 204B further configured to merely display the contact information in the second system, when the determination module 204A determines that the current running system in the terminal is the second system.

In the above embodiment, the first system is based on a higher authorization, that is, the contact information stored in both of the first system and the second system can be viewed under the first system. However, the contact information stored in the first system cannot be displayed under the second system, thereby avoiding leakage of the contact information stored in the first system.

In the above embodiment, preferably, the processing unit 204 further includes: a second display unit 204C configured to display the contact information in the second system for selecting by a user when the current running system in the terminal is the first system and a command to move or copy the contact information from the second system to the first system is received, and a first execution unit 204D configured to move or copy selected contact information to the first system through the data channel; and/or
a third display unit 204E configured to display the contact information in the first system for selecting by the user when the current running system in the terminal is the first system and a command to move or copy the contact information from the first system to the second system is received, and a second execution unit 204F configured to move or copy selected contact information to the second system through the data channel.

According to the above embodiment, an interaction of contact information between the first system and the second system is realized, at the same time, the security of the contact information in the first system is ensured because the contact information can be moved or copied only under the first system.

In the above embodiment, preferably, the processing unit 204 further includes: a checking unit 204G configured to execute a security check on the selected contact information before the first execution unit 204D moves or copies the selected contact information to the first system through the data channel, and permit to move or copy the selected contact information to the first system through the data channel when the security check is passed.

In the above embodiment, by executing a security check on the selected contact information and permitting to move or copy the selected contact information to the first system through the data channel when the security check is passed, the moving of any malicious data to the first system, which can lead to data leakage of the first system, can be avoided. Thus, the security of the contact information in the first system can be more effectively ensured.

In the above embodiment, preferably, the contact information in the first system includes contact information stored in a storage space available to the first system, and the contact information in the second system includes contact information stored in a storage space available to the second system and contact information stored in a SIM card of the terminal.

In another embodiment, a terminal (not shown in FIG. 2) which includes the management device 200 shown in FIG. 2 is provided.

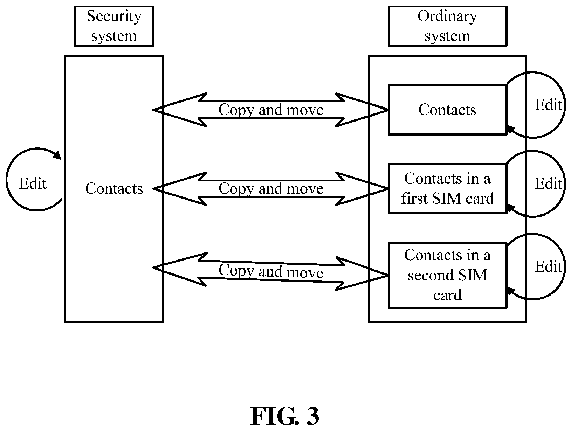

Combined with FIG. 3, an embodiment of a terminal including a security system and an ordinary system, is described to illustrate the present disclosure.

In the embodiment, the present disclosure provides an importing process of contacts under dual systems. The importing method can move, copy, and modify (e.g., edit or delete) contacts between the security system and the ordinary system, under a contact management menu in the security system.

Currently, both the ordinary system and the security system have a contact list, and data structures and processing methods of the contact lists are the same, thus, a batch processing operation can execute on the contacts in the ordinary system and in the security system, and no information is lost when adding or deleting contact information.

FIG. 3 shows a schematic diagram of one embodiment of an importing process of contacts under dual systems, according to the present disclosure. In one embodiment, under the security system, the contact information in both of the security system and the ordinary system can be displayed in the contact management menu of the security system. A contact in the security system has only one storage location, such as in a telephone, which is the storage space of the security system in the terminal. The ordinary system can display the contacts in three catalogs at most, namely in a telephone, in a first SIM card, and in a second SIM card. If the terminal can have more than two SIM cards, all contacts in the more than two SIM cards can be displayed. In one embodiment, information of the contacts in the first SIM card and the second SIM card can be displayed according to a SIM card checking result. No information is displayed if no SIM card is in the terminal.

In one embodiment, under the ordinary system, a contact management menu of the ordinary system does not display the contact information the security system, thereby ensuring that the security system has a higher authority for data accessing.

Although storage locations of the contacts in the security system and the ordinary system are different, however, a contact application or program can transfer contact data through a channel directly between the dual systems, and the contact application or program can add or delete the contact data according to actual storage location(s). Thus, data formatting and security during a transferring procedure can be ensured. This reduces occurrence of virus transmissions or leakage of important information efficiently.

The above embodiments of the present disclosure can solve a problem of a prior art security system, which does not read from or write to any SIM card in the terminal, and cannot support a batch processing operation on contacts transferred by using a Universal Serial Bus (USB) interface. Meanwhile, the batch processing operation on the contacts, depending on the above embodiments, can avoid data loss when a third party application is invoked to execute a synchronizing operation on the contacts. In addition, it is more flexible and efficient to execute a batch processing operation in copying, moving, and deleting contacts than a simple synchronizing operation on the contacts.

According to the above embodiments, the present disclosure provides a new management method on the contacts in the terminal, the new management method can ensure high-level security of the contact information in the security system, realize the interaction of the contact information between the ordinary system and the security system, and improve user experience.

Although certain inventive embodiments of the present disclosure have been specifically described, the present disclosure is not to be construed as being limited thereto. Various changes or modifications may be made to the present disclosure without departing from the scope and spirit of the present disclosure.

## Claims

1. A management method for contacts in a terminal, the terminal comprising a first system and a second system, the management method comprising:
setting a data channel between the first system and the second system for implementing a communication;
permitting the first system to read contact information in the second system through the data channel, under the condition that a current running system in the terminal is the first system; and
prohibiting the second system from reading contact information in the first system through the data channel, under the condition that the current running system in the terminal is the second system.

2. The management method of claim 1, further comprising:
determining whether the current running system of the terminal is the first system or the second system, when a command to view all contact information in the terminal is received;
displaying the contact information in the first system or displaying the contact information in the first system and the contact information in the second system, under the condition that the current running system in the terminal is the first system; and
displaying the contact information in the second system, under the condition that the current running system in the terminal is the second system.

3. The management method of claim 1, further comprising:
displaying the contact information in the second system for selecting by a user when the current running system in the terminal is the first system and a command to move or copy the contact information from the second system to the first system is received, and moving or copying selected contact information to the first system through the data channel; and/or
displaying the contact information in the first system for selecting by the user when the current running system in the terminal is the first system and a command to move or copy the contact information from the first system to the second system is received, and moving or copying selected contact information to the second system through the data channel.

4. The management method of claim 3, before moving or copying the selected contact information to the first system through the data channel, further comprising:
executing a security check on the selected contact information, and permitting to move or copy the selected contact information to the first system through the data channel when the security check is passed.

5. The management method of any one of claims 1 to 4, wherein the contact information in the first system comprises contact information stored in a storage space available to the first system, and the contact information in the second system comprises contact information stored in a storage space available to the second system and contact information stored in a subscriber identity module (SIM) card of the terminal.

6. A management device for contacts in a terminal, the terminal comprising a first system and a second system, the management device comprising:
a setting unit configured to set a data channel between the first system and the second system for implementing a communication; and
a processing unit configured to permit the first system to read contact information in the second system through the data channel under the condition that a current running system in the terminal is the first system, and prohibit the second system from reading contact information in the first system through the data channel under the condition that the current running system in the terminal is the second system.

7. The management device of claim 6, wherein the processing unit comprises:
a determination unit configured to determine whether the current running system of the terminal is the first system or the second system, when a command to view all contact information in the terminal is received;
a first display unit configured to display the contact information in the first system or display the contact information in the first system and the contact information in the second system, under the condition that the current running system in the terminal is the first system; and
the first display unit further configured to display the contact information in the second system, under the condition that the current running system in the terminal is the second system.

8. The management device of claim 6, wherein the processing unit comprises:
a second display unit configured to display the contact information in the second system for selecting by a user when the current running system in the terminal is the first system and a command to move or copy the contact information from the second system to the first system is received, and a first execution unit configured to move or copy selected contact information to the first system through the data channel; and/or
a third display unit configured to display the contact information in the first system for selecting by the user when the current running system in the terminal is the first system and a command to move or copy the contact information from the first system to the second system is received, and a second execution unit configured to move or copy selected contact information to the second system through the data channel.

9. The management device of claim 8, wherein the processing unit further comprises:
a checking unit configured to execute a security check on the selected contact information before the first execution unit moves or copies the selected contact information to the first system through the data channel, and permit to move or copy the selected contact information to the first system through the data channel when the security check is passed.

10. A terminal, comprises the management device for contacts in the terminal as claimed in any one of claims 6 to 9.
